# EUROPEAN PATENT APPLICATION

(11) **EP 4 800 809 A1**
(43) Date of publication of application: **02.09.2026**
(21) Application number: 25857389.8
(22) Date of filing: 19.08.2025
(51) Int. Cl.: H01M 10/6552, H01M 10/656, H01M 10/613

(54) **BATTERY DEVICE**

(30) Priority: 20.08.2024 KR 20240111432; 17.12.2024 KR 20240188286
(71) Applicant: LG Energy Solution, Ltd., Seoul 07335 (KR)
(72) Inventor: PARK, Sungkyu, Daejeon 34122 (KR)
(74) Representative: Goddar, Heinz J.
(86) International application number: PCT/KR2025/012574
(87) International publication number: WO 2026/043253

(57) **Abstract**

A battery device according to various embodiments comprises: a battery assembly; a housing for accommodating the battery assembly; a plurality of flow paths which are inside the housing and disposed between the battery assembly and an inner wall of the housing and along which flows a cooling material for reducing heat generated from the battery assembly; and a connection device for fluidly connecting at least some of the plurality of flow paths, wherein the connection device may comprise a first connection part and a second connection part which is connected to the first connection part and coupled thereto to be movable relative to the first connection part inside the housing.

## Description

### Technical Field

### CROSS-REFERENCE TO RELATED APPLICATION(S)

The present application claims the benefit of priority of Korean Patent Application No. 10-2024-0111432 filed on August 20, 2024, Korean Patent Application No. 10-2024-0188286 filed on December 17, 2024, and Korean Patent Application No. 10-2025-0114843 filed on August 19, 2025, in the Korean Intellectual Property Office, the entire content of which is incorporated herein for all purposes by this reference.

### Technical Field

The present disclosure relates to a battery device.

### Background Art

With the full-scale development of an electric vehicle, a storage battery, a robot, and a satellite, research on a high-performance secondary battery for repeated charging and discharging is actively conducted currently.

A secondary battery in current daily use includes a nickel-cadmium battery, a nickel-hydrogen battery, a nickel-zinc battery, and a lithium secondary battery. Particularly, since memory effect hardly occurs when compared to a nickel-based secondary battery, the lithium secondary battery may be freely charged and discharged, has a greatly low self-discharging rate, and has a high energy density.

Recently, in order to improve energy density, a battery cell or the like has been disposed in most of the space in a battery device. Accordingly, a space in which a peripheral component is to be disposed has been reduced. In addition, since heat generated in multiple battery cells affects the performance and safety of the battery device, the heat is required to be appropriately treated.

### Detailed Description of the Invention

### Technical Goals

Heat generated in a battery cell may be discharged to an outside through a cooling material flowing through a flow path that is one of peripheral components of a battery device.

Meanwhile, for assembling convenience, the flow path which is provided to the battery device may be formed in a scheme of connecting and assembling a plurality of disconnected flow paths (e.g., individual pipes). In this case, the flow paths which are spaced apart from each other are required to be fluidly connected. Conventionally, a scheme of connecting the plurality of disconnected flow paths by using a connector having an integrally formed structure or an elastic material-based indentation hose has been considered.

However, a space for assembling the integrated connector may be difficult to be provided as a space in which a space in which a peripheral component is to be disposed is reduced, and reuse may not be allowed as a scheme of destroying the indentation hose during disassembling.

Various example embodiments of the present disclosure may provide a battery device of which assembling and disassembling in a narrow space are facilitated and of which energy density is improved through a connection device of which reuse is allowed.

However, the goals to be achieved by example embodiments of the present disclosure are not limited to the objectives described above and other objects may be clearly understood from the following example embodiments by those skilled in the art.

### Technical solutions

According to an example embodiment of the present disclosure, there is provided a battery device including a battery assembly, a housing configured to accommodate the battery assembly, a plurality of flow paths that is disposed between the battery assembly and an inner wall of the housing in the housing and in which a cooling material that cools heat generated in the battery assembly flows, and a connection device configured to fluidly connect at least a portion of the plurality of flow paths, and the connection device includes a first connection part, and a second connection part connected to the first connection part and coupled so that movement relative to the first connection part is allowed in the housing.

The second connection part may include an insertion space into which the first connection part is at least partially insertable.

The first connection part may relatively move, in the housing, along a direction along which at least a portion of areas is inserted into an insertion space or detached from the insertion space.

The first connection part may at least partially include an area overlapping the second connection part during the relative movement.

The first connection part may further include a first coupling part not overlapping the second connection part during the relative movement, and a first hook part mounted on an outer circumferential surface of the first coupling part and having a first protrusion catch part protruding inward toward the first coupling part.

The first hook part may further include a handling part formed to protrude in an outside direction opposite to a protrusion direction of the first protrusion catch part, and the handling part is formed to protrude not to overlap the insertion space when viewed in a direction of the relative movement.

The second connection part may further include a fixation coupling part to which a through portion is formed so that a portion of the first connection part which is inserted into the insertion space is exposed.

The connection device may further include a coupling body of which at least a portion is coupled between the first connection part and the second connection part to stop the relative movement of the first connection part and the second connection part by passing through the through portion.

The fixation coupling part may further include a catch part disposed to be in contact with the handling part by protruding from a surface facing the first connection part when the first connection part relatively moves.

wherein the fixation coupling part may further include a seating part disposed to be in contact with the first hook part by indenting from a surface facing the first connection part when the first connection part relatively moves.

The first connection part may further include a first disk part disposed between the insertion space and the first coupling part during the relative movement and connected to the first hook part.

The first disk part may be disposed to at least partially overlap the insertion space when viewed in a direction of the relative movement.

The first disk part may have a cross-sectional area larger than a cross-sectional area of an area overlapping the insertion space when viewed in the direction of the relative movement.

The first coupling part may have a slope angled from a direction of the relative movement.

The first connection part may further include a groove portion in at least a portion of the area overlapping the second connection part during the relative movement.

The second connection part may include a second coupling part not overlapping the first connection part during the relative movement, and a main flow direction of the cooling material passing through the first coupling part may be parallel to a main flow direction of the cooling material passing through the second coupling part.

The second connection part may further include a second hook part mounted on an outer circumferential surface of the second coupling part and having a second protrusion catch part protruding inward toward the second coupling part.

A main flow direction of the cooling material passing through a portion of areas of the first connection part, which overlaps the second connection part during the relative movement may be parallel to the main flow direction of the cooling material passing through the first coupling part.

The second connection part may further include a second disk part disposed between the insertion space and the second coupling part during the relative movement and connected to the second hook part.

The second connection part may include a second coupling part not overlapping the first connection part during the relative movement, and a main flow direction of the cooling material passing through the first coupling part is substantially perpendicular to a main flow direction of the cooling material passing through the second coupling part.

A main flow direction of the cooling material passing through at least a portion of areas of the first connection part, which overlaps the second connection part during the relative movement may be substantially parallel to the main flow direction of the cooling material passing through the first coupling part and substantially perpendicular to the main flow direction of the cooling material passing through the second connection part.

Additional aspects of example embodiments will be set forth in part in the description which follows and, in part, will be apparent from the description.

### Effects of the Invention

According to various example embodiments of the present disclosure, it is possible to provide a battery device of which assembling and disassembling are facilitated in a narrow space, of which reuse is allowed during disassembling, that do not waste a space for non-required assembling in the battery device, of which energy density is improved by appropriately treating heat generated in a battery cell or the like, and of which performance and safety are improved.

### Brief Description of Drawings

Drawings shown in the present disclosure is in accordance with example embodiments of the present disclosure. A ratio of a width, breadth, or a thickness (or a height) of each element is to describe the present disclosure in detail, and the ratio may differ from an actual ratio. In addition, each axis in a coordinate system illustrated in the drawings may be perpendicular to another. An arrow may point in a positive direction, and a direction exactly opposite to (e.g., a direction rotated through 180 degrees from) the direction of the arrow may be a negative direction.
FIG. 1 is a schematic exploded perspective diagram illustrating a battery device according to an example embodiment of the present disclosure.
FIG. 2 is a partial perspective diagram illustrating a battery device according to an example embodiment of the present disclosure.
FIG. 3 is a cross-sectional diagram schematically illustrating at least a portion of a battery device according to an example embodiment of the present disclosure.
FIGS. 4 through 6 are perspective diagrams schematically illustrating a connection device of a battery device according to an example embodiment of the present disclosure.
FIGS. 7 through 9 are perspective diagrams schematically illustrating a connection device of a battery device according to an example embodiment of the present disclosure.
FIG. 10 is an exploded perspective diagram in which a connection device of a battery device according to an example embodiment of the present disclosure is disassembled.
FIG. 11 is an exploded perspective diagram in which a connection device of a battery device according to an example embodiment of the present disclosure is disassembled.
FIG. 12 is a rear diagram schematically illustrating a portion of a connection device of a battery device according to an example embodiment of the present disclosure.
FIGS. 13 through 14 are perspective diagrams schematically illustrating a connection device of a battery device according to an example embodiment of the present disclosure.
FIG. 15 is a cross-sectional diagram illustrating a cross section of a portion of a first coupling part according to an example embodiment of the present disclosure.
FIG. 16 is an exploded perspective diagram in which a connection device of a battery device according to an example embodiment of the present disclosure is disassembled.
FIGS. 17 through 18 are perspective diagrams schematically illustrating a connection device of a battery device according to an example embodiment of the present disclosure.
FIG. 19 is an exploded perspective diagram in which a connection device of a battery device according to an example embodiment of the present disclosure is disassembled.
FIG. 20 is a cross-sectional diagram simply illustrating at least a portion of an area in which a coupling body according to an example embodiment of the present disclosure is in contact with a first connection part.

### Mode for Carrying Out the Invention

Before the present disclosure is described, terms or words used in the present disclosure and the accompanying claims are not to be limited to general definitions or dictionary definitions. The terms and words are to be construed under a principle that an inventor may appropriately define a concept of a term in order to describe their invention in the best way. Example embodiments described in the present disclosure and configurations illustrated in the accompanying drawings are merely most desirable example embodiments and do not represent all of the technical spirit of the present disclosure. Thus, it should be understood that various equivalents and modifications that may replace the example embodiments and configurations may be present at the time of filing the application of the present disclosure.

The same reference numerals or symbols illustrated in the accompanying drawings represent components or elements performing substantially identical functions. For convenience for description and understanding, example embodiments different from each other may be described with the same reference numerals or symbols. In other words, although a plurality of drawings illustrates elements having the same reference numeral, the plurality of drawings does not mean only one example embodiment.

In the following descriptions, terms in a singular form include terms in a plural form unless an apparently and contextually conflicting description is present. Terms such as "including" or "comprising" are to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

In the present disclosure, a battery and a cell may have an identical meaning. In addition, the battery or the cell may be a term wholly referring to a battery cell and a battery module or battery pack including the battery cell, which are a unit of the battery or the cell.

Various example embodiments of the present disclosure may provide a battery device of which assembling and disassembling are facilitated in a narrow space and that improves an energy density and minimizes a trouble, affecting performance and safety, by appropriately processing heat generated in the battery cell or the like.

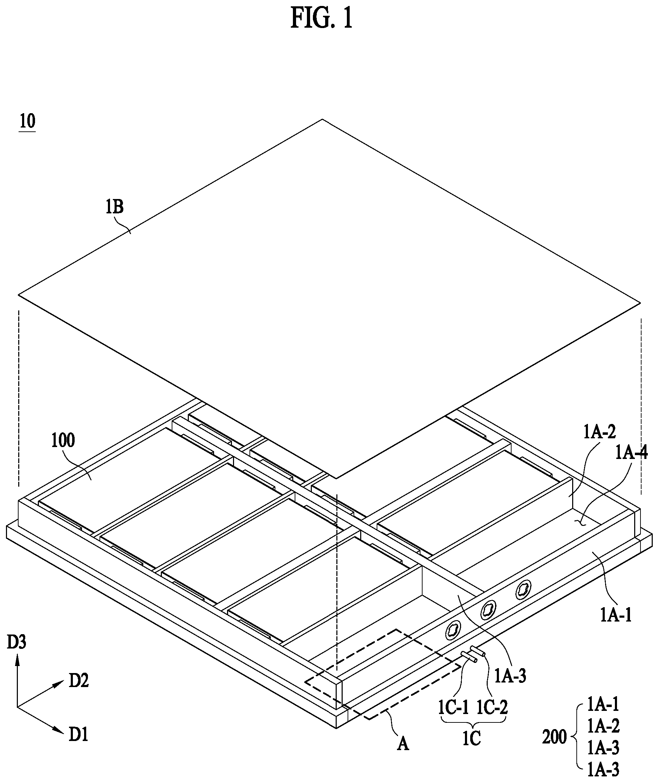

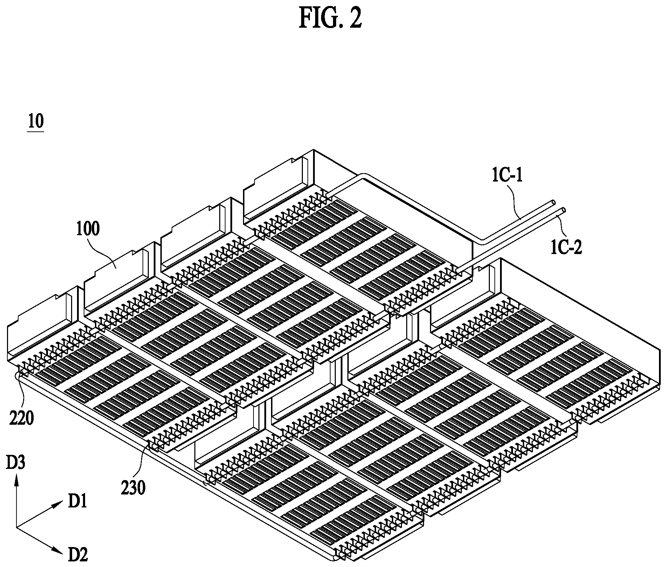

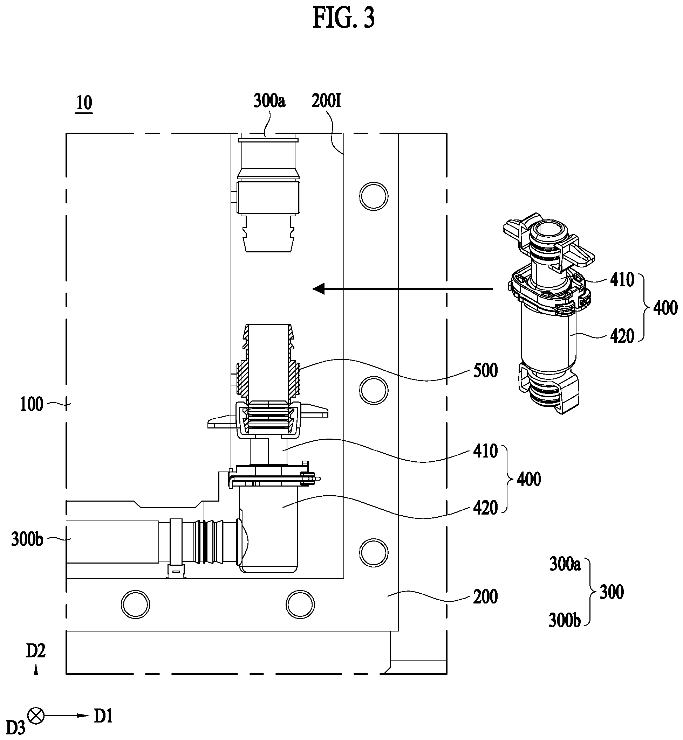

FIG. 1 is a partial exploded perspective diagram illustrating a battery device 10 according to an example embodiment of the present disclosure. FIG. 2 is a partial perspective diagram illustrating the battery device 10 according to an example embodiment of the present disclosure. FIG. 3 is a schematic illustration of at least a portion (e.g. section A in FIG. 1) of the battery device 10 according to an example embodiment of the present disclosure.

In the present disclosure, the battery device 10 may refer to anything including a battery cell. For example, the battery device 10 may be a battery pack including a general battery module, a battery pack in a cell-to-pack form, which includes a non-modularized battery cell, or a battery module including a general battery cell.

In an example embodiment, the battery device 10 may include a battery assembly 100. In the present disclosure, the battery assembly 100 may include one or more battery cells. In an example embodiment, the battery assembly 100 may be a battery module in a form in which a battery cell is accommodated in a case. In an example embodiment, the battery assembly 100 may be in a form in which the battery cells are stacked along one direction in an aligned form.

In an example embodiment, the battery device 10 may include a housing 200 accommodating the battery assembly 100. The battery assembly 100 may be accommodated in the housing 200. A form of the housing 200 is not particularly limited as long as the housing 200 may accommodate the battery assembly 100. For example, the housing 200 may be in a hexahedral form that forms an accommodating space accommodating the battery assembly 100 and of which one surface is opened, and the opened surface may be tightly sealed with a cover or the like after assembling is completed. For example, the housing 200 may include a pack outer wall frame 1A-1 surrounding at least a portion of the battery assembly 100 which is provided in the accommodating space of the battery assembly 100. In addition, for example, the housing 200 may include a pack side wall 1A-2 extended along a first direction (e.g., a D2-axis direction) to divide the accommodating space of the battery assembly 100 to correspond to a size of the battery assembly 100 and a cross member 1A-3 extended along a second direction (e.g., a D1-axis direction). Also, for example, the housing 200 may divide, through the pack side wall 1A-2 and the cross member 1A-3, an electronic equipment space 1A-4 for accommodating an electronic equipment device other than the battery assembly 100. For example, the electronic equipment device may include a battery management system, and this may be electrically connected to the battery assembly 100 included in the battery device 10 to perform transmission and reception of data required for management of the battery assembly 100 and an operation based on the data.

In an example embodiment, the battery device 10 may include a flow path 300 in which a cooling material flows (e.g., an inflow path 220 communicating with a coolant inflow pipe 1C-1 and an outflow path 230 communicating with a coolant outflow pipe 1C-2 in FIG. 2). The cooling material may cool heat generated in the battery assembly 100. The cooling material is a material causing a cooling effect and is not particularly limited as long as the cooling material is a coolant used in a corresponding field. For example, the cooling material may include at least one of water, ammonia, Freon gas, and methyl chloride. For example, the cooling material may flow in via the coolant inflow pipe 1C-1, flow around the battery assembly 100 along the inflow path 220 and the outflow path 230, and flow out via the coolant outflow pipe 1C-2.

In an example embodiment, the flow path 300 (e.g., the inflow path 220 and the outflow path 230) may be disposed between the battery assembly 100 and an inner wall 1A-1 or 200I of the housing 200 in the housing 200. The flow path 300 may be a peripheral component of the battery device 10. In an example embodiment, the flow path 300 may be fixed to the inner wall 1A-1 or 200I of the housing 200 through a fixation device or the like.

In an example embodiment, a plurality of flow paths 300 may be present. In an example embodiment, the flow path 300 may include a first flow path 300a and a second flow path 300b fluidly disconnected from each other. The first flow path 300a and the second flow path 300b may be fluidly connected as communicating with each other by a connection device 400 that will be described below. In an example embodiment, the connection device 400 may fluidly connect at least a portion of the plurality of flow paths 300.

In an example embodiment, a plurality of connection devices 400 fluidly connecting the first flow path 300a and the second flow path 300b may be present, but is not limited thereto.

Meanwhile, in an example embodiment, when the plurality of connection devices 400 is present, an integrated connector 500 may be disposed between the connection devices 400. In an example embodiment, the integrated connector 500 may fluidly connect a plurality of different connection devices 400. In addition, even when one connection device 400 is solely present, the integrated connector 500 may be disposed at an end of the connection device 400.

Generally, the integrated connector 500 may require a sizable assembling space in a process of fastening different members to both ends. However, when the connection device 400 according to example embodiments is fastened to the both ends (or one end) of the integrated connector 500, as the connection device 400 is assembled after the integrated connector 500 is fastened earlier, a benefit of assembling even in a small space may be present.

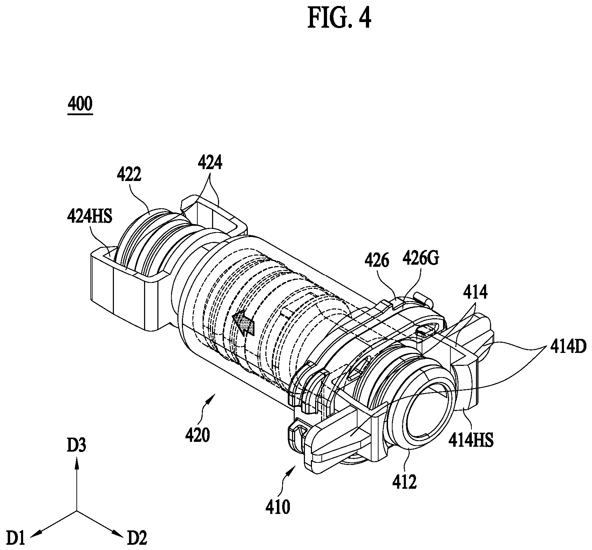

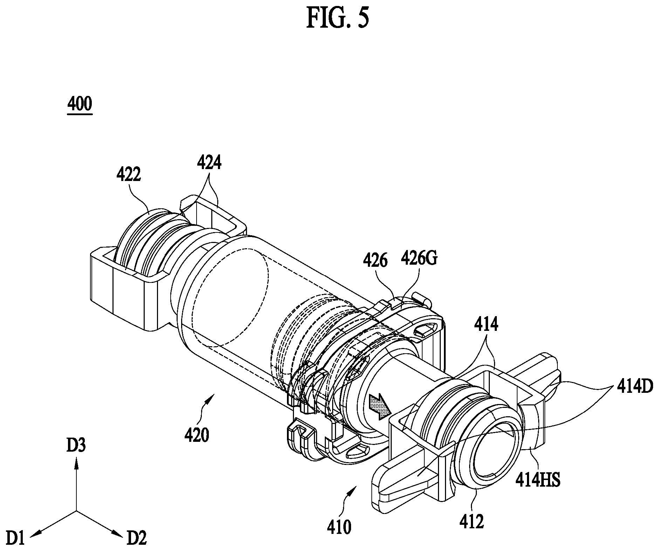

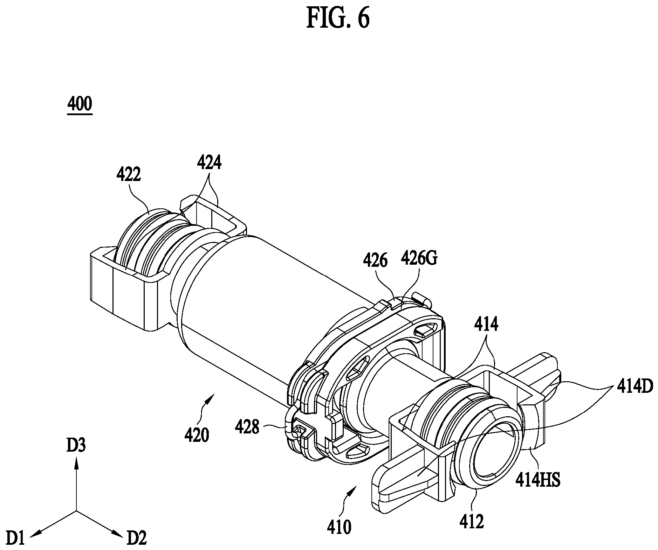

FIGS. 4 through 6 are perspective diagrams schematically illustrating the connection device 400 of the battery device 10 according to an example embodiment of the present disclosure.

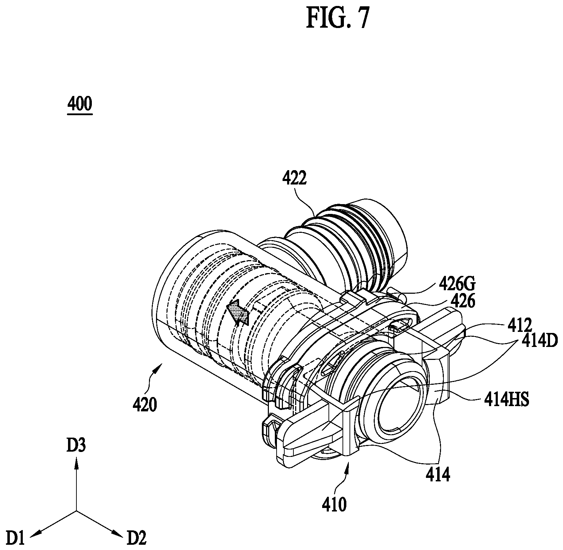

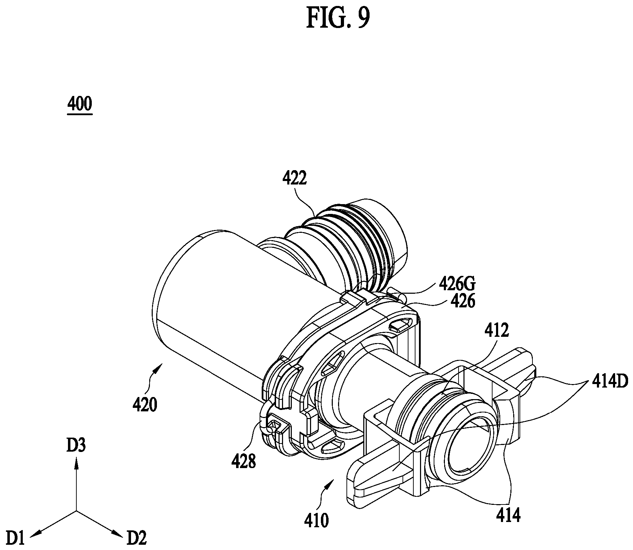

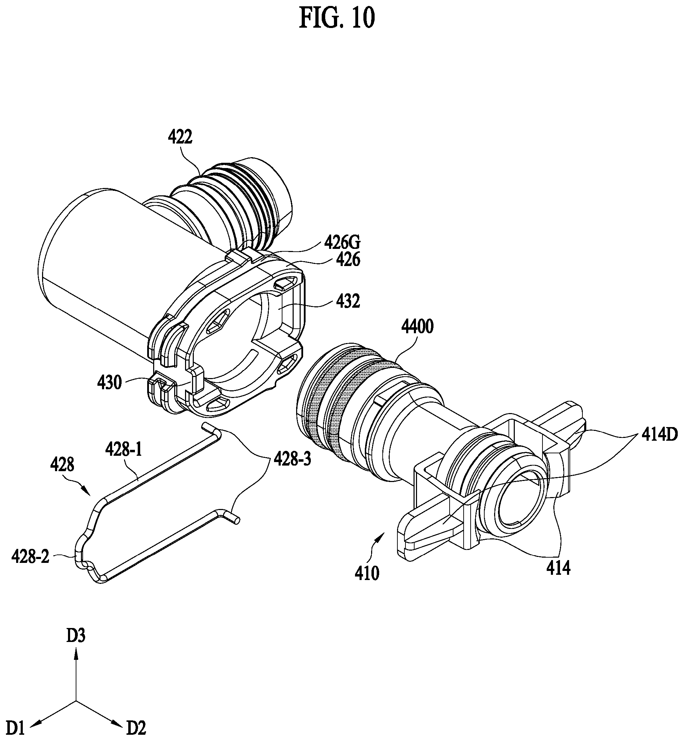

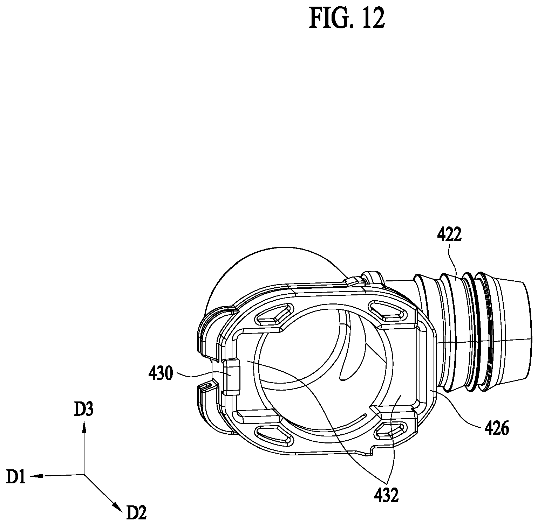

FIGS. 7 through 9 are perspective diagrams schematically illustrating the connection device 400 of the battery device 10 according to an example embodiment of the present disclosure. FIGS. 10 through 11 are perspective diagrams schematically illustrating the connection device 400 of the battery device 10 according to an example embodiment of the present disclosure. FIG. 12 is a rear diagram schematically illustrating a portion of the connection device 400 of the battery device 10 according to an example embodiment of the present disclosure.

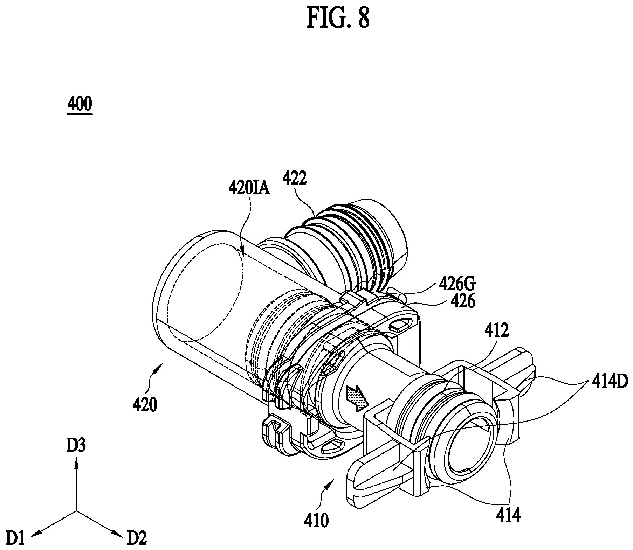

In an example embodiment, the connection device 400 may include a first connection part 410 and a second connection part 420 connected to the first connection part 410. In an example embodiment, the second connection part 420 may be coupled so that movement relative to the first connection part 410 is allowed in the housing 200. In an example embodiment, the second connection part 420 may include an insertion space 420IA (of FIG. 8) into which the first connection part 410 is at least partially insertable. In an example embodiment, the insertion space 420IA may have a shape corresponding to an appearance and a size of the first connection part 410 so that the first connection part 410 may be inserted therein. For example, at least a portion of the first connection part 410, which is inserted into the second connection part 420, may have a cylindrical shape, and according to the shape, the insertion space 420IA may have a cylindrical shape. In an example embodiment, the insertion space 420IA may have an appropriate size and shape so that the first connection part 410 is easily inserted and appropriately fit after being inserted.

In an example embodiment, the first connection part 410 may relatively move along a direction along which at least some areas thereof are inserted into the insertion space 420IA or detached from the insertion space 420IA (namely, a D2 direction) in the housing 200. In other words, for example, a direction of relative movement may be the direction along which the at least some areas of the first connection part 410 are inserted into the insertion space 420IA or detached from the insertion space 420IA.

In an example embodiment, the direction along which the at least some areas of the first connection part 410 are inserted into the insertion space 420IA or detached from the insertion space 420IA may be a linear direction. For example, the first connection part 410 may relatively move in a direction in which the at least some areas thereof are inserted into the insertion space 420IA (namely, a -D2 direction) or in a direction in which the at least some areas thereof are detached from the insertion space 420IA (namely, a +D2 direction).

In an example embodiment, the first connection part 410 may at least partially include an area overlapping the second connection part 420 during the relative movement. In an example embodiment, the first connection part 410 may be at least partially inserted into the insertion space 420IA, and at least a portion of a portion, inserted into the insertion space 420IA, of the first connection part 410 may overlap the second connection part 420 during the relative movement.

In an example embodiment, in order that the first connection part 410 easily moves relative to the second connection part 420, a lubricant layer may be formed on at least some surfaces of the area overlapping the second connection part 420 during the relative movement of the first connection part 410. In an example embodiment, the lubricant layer may include one or more of a solid lubricant and a liquid lubricant. The solid lubricant may include one or more of molybdenum disulfide (MoS2), tungsten disulfide (WS2), graphite, and polytetrafluoroethylene (PTFE), but is not limited thereto as long as the solid lubricant lowers a coefficient of friction. The solid lubricant may form the lubricant layer in a scheme of coating, deposition, or the like. The liquid lubricant may include one or more of a mineral oil-based lubricant oil, a synthetic oil, and a silicone oil, but is not limited thereto as long as the liquid lubricant lowers the coefficient of friction. The liquid lubricant may form the lubricant layer in a scheme of coating, soaking, or the like.

In an example embodiment, a processed surface portion having surface roughness lower than that of a non-overlapping area may be formed on at least some surfaces in the area overlapping the second connection part 420 during the relative movement of the first connection part 410. The movement, of the first connection part 410, relative to the second connection part 420 may be easily performed through the processed surface portion. The processed surface portion may be formed, for example, in a scheme of surface polishing or the like, but is not limited thereto.

In an example embodiment, a member for sealing (e.g., an O-ring 440O) may be coupled to at least a portion of the area, of the first connection part 410, overlapping the second connection part 420 during relative movement. Through this, during the movement of the first connection part 410 relative to the second connection part 420, a sealing property of the first connection part 410 and the second connection part 420 may be improved.

In an example embodiment, the connection device 400 may vary in length depending on a degree to which the first connection part 410 is inserted into the insertion space 420IA. Since the connection device 400 may have an appropriate length by adjusting the degree to which the first connection part 410 is inserted into the insertion space, assembling and disassembling in a narrow space such as an inside of the housing 200 may be facilitated.

In an example embodiment, the first connection part 410 may include a first coupling part 412 not overlapping the second connection part 420 even in a status of being completely coupled to the second connection part 420 during the relative movement. In an example embodiment, the first connection part 410 may include a first hook part 414 mounted on an outer circumferential surface of the first coupling part 412 and having a first protrusion catch part 414HS protruding inward toward the first coupling part 412.

In an example embodiment, the first hook part 414 may include a handling part 414D formed to protrude in an outside direction opposite to a protruding direction of the first protrusion catch part 414HS. Assembling and disassembling of the first connection part 410 and the second connection part 420 may be facilitated in the narrow space such as the inside of the housing 200 through the handling part 414D.

In an example embodiment, the handling part 414D may be formed to protrude not to overlap the insertion space 420IA. Through this, as the first connection part 410 is not allowed to be excessively inserted into the second connection part 420, the assembling and the disassembling in the narrow space may be prevented from becoming difficult.

In an example embodiment, the second connection part 420 may include a fixation coupling part 426 to which a through portion 426G is formed so that a portion of the first connection part 410 which is inserted into the insertion space 420IA is exposed.

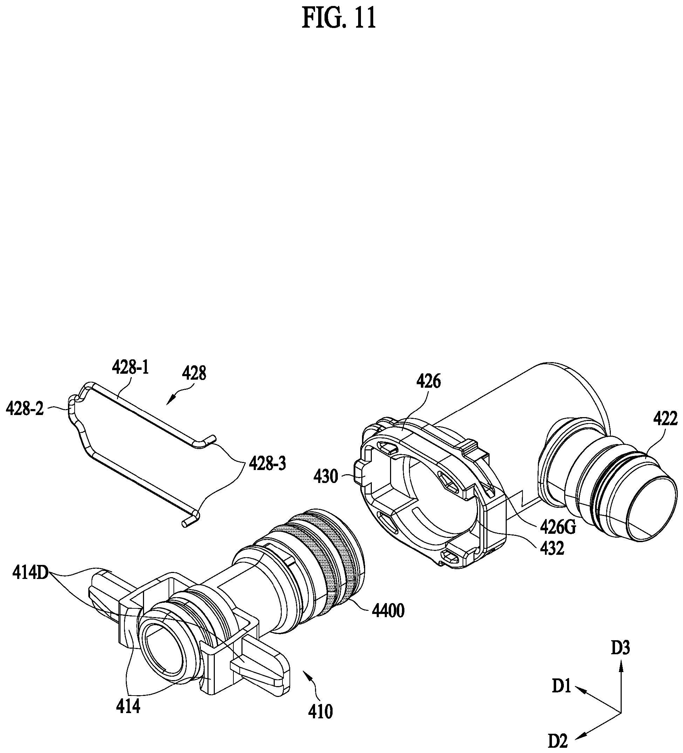

In an example embodiment, the connection device 400 may include a coupling body 428 (of FIGS. 10 and 11) of which at least a portion is coupled between the first connection part 410 and the second connection part 420 to stop the relative movement of the first connection part 410 and the second connection part 420 by passing through the through portion 426G. In an example embodiment, the through portion 426G may be formed to match a shape of the coupling body 428, and the coupling body 428 may stop the relative movement of the first connection part 410 and the second connection part 420 by pressing the portion of the first connection part 410 which is inserted into the insertion space 420IA. That is, when the appropriate length (e.g., a length corresponding to a spaced distance between respective end portions of the flow paths 300 to connect through the connection device 400) is determined while the first connection part 410 and the second connection part 420 are moved relative to each other during a task in the narrow space, a position of the first connection part 410 may be fixed through the coupling body 428.

In an example embodiment, the coupling body 428 may include a main body portion 428-1 that passes through the through portion 426G, presses between the first connection part 410 and the second connection part 420, and is coupled in between. A plurality of main body portions 428-1 may be present. In an example embodiment, the coupling body 428 may include a connection part 428-2 connecting the plurality of main body portions 428-1 which are spaced apart from each other. For example, the coupling body 428 may have a C-shaped structure in which two main body portions 428-1 are connected through the connection part 428-2.

In an example embodiment, the connection part 428-2 may have appropriate elasticity. In an example embodiment, before pressing between the first connection part 410 and the second connection part 420, the connection part 428-2 may maintain a spaced distance between the plurality of main body portions 428-1. At this point, the spaced distance the plurality of main body portions 428-1 may be smaller, through the connection part 428-2, than an outer diameter of the first connection part 410 or an outer diameter of the second connection part 420. Through this, the main body portion 428-1 may maintain a pressing force applied between the first connection part 410 and the second connection part 420 at a predetermined level.

Also, when an external force is applied, the connection part 428-2 may increase or decrease the spaced distance between the plurality of main body portions 428-1 compared to that before application of the external force. For example, a spaced distance between the two main body portions 428-1 is increased by pressing the connection part 428-2, the main body portion 428-1 which has been inserted inward of the through portion 426G may be further easily discharged to an outside of the through portion 426G. Meanwhile, when the external force to the connection part 428-2 is removed, an elastic force is applied by the connection part 428-2 so that the spaced distance between the plurality of main body portions 428-2 is decreased, and accordingly, the main body portion 428-1 may press between the first connection part 410 and the second connection part 420.

In an example embodiment, the coupling body 428 may include a latch portion 428-3 protruding at an end portion of the main body portion 428-1 along a direction crossing an extended direction of the main body portion 428-1. For example, the extended direction of the main body portion 428-1 may be a D1 direction, and an extended direction of the latch portion 428-3 may be the D2 direction. In an example embodiment, an angle between the extended direction of the main body portion 428-1 and the extended direction of the latch portion 428-3 may be less than or equal to 90 degrees. Through this, separation, from the through portion 426G, of the coupling body 428 which presses the first connection part 410 and the second connection part 420 may be minimized.

In an example embodiment, the through portion 426G may have a shape corresponding to the coupling body 428. Specifically, the through portion 426G may have a shape corresponding to the main body portion 428-1. The main body portion 428-1 may press between the first connection part 410 and the second connection part 420 by passing through the second connection part 420 through the through portion 426G. When the main body portion 428-1 passes through the through portion 426G, as being put on an outer wall of the second connection part 420, the latch portion 428-3 may minimize the separation of the coupling body 428 from the through portion 426G.

In an example embodiment, the fixation coupling part 426 may include a catch part 430 disposed to be in contact with the handling part 414D when the first connection part 410 relatively moves. In an example embodiment, the catch part 430 may protrude from a surface facing the first connection part 410. In an example embodiment, when the first connection part 410 relatively moves, since the first connection part 410 is not inserted further into the second connection part 420 when the handling part 414D is in contact with the catch part 430, the task in the narrow space due to excessive insertion of the first connection part 410 into the second connection part 420 may be prevented from becoming difficult.

In an example embodiment, a fixation coupling part 242 may include a seating part 432 disposed to be in contact with the first hook part 414 when the first connection part 410 relatively moves. In an example embodiment, the seating part 432 may indent from a surface facing the first connection part 410. In an example embodiment, when the first connection part 410 relatively moves, since the first connection part 410 is not inserted further into the second connection part 420 when the seating part 432 is in contact with the first hook part 414, the task in the narrow space due to the excessive insertion of the first connection part 410 into the second connection part 420 may be prevented from becoming difficult. In an example embodiment, the second connection part 420 may include a second coupling part 422 not overlapping the first connection part 410 during the relative movement. In an example embodiment, the second connection part 420 may include a second hook part 424 mounted on an outer circumferential surface of the second coupling part 422 and having a second protrusion catch part 424HS protruding inward toward the second coupling part 422.

In an example embodiment, the first coupling part 412 and the second coupling part 422 each may be fluidly connected to the flow path 300. In an example embodiment, the first coupling part 412 and the second coupling part 422 each may be fluidly connected to the integrated connector 500. Also, in an example embodiment, the first coupling part 412 and the second coupling part 422 each may be fluidly connected to a first coupling part 412 or a second coupling part 422 of another connection device 400. In an example embodiment, when the first connection part 410 is fluidly connected to a connection target such as the flow path 300, the integrated connector 500, or the other connection device 400, at least a portion of the connection target may be connected to at least a portion of the first coupling part 412 by entering between the first coupling part 412 and the first hook part 414. In an example embodiment, as the first protrusion catch part 414HS presses the connection target, which enters between the first coupling part 412 and the first hook part 414, in a direction of the first coupling part 412 (namely, the D1 direction), the task in the narrow space may be facilitated, and an outflow of a cooling material may be prevented through a further excellent coupling force.

In an example embodiment, a main flow direction of the cooling material passing through the first coupling part 412 may be parallel to a main flow direction of the cooling material passing through the second coupling part 422. In another example embodiment, the main flow direction of the cooling material passing through the first coupling part 412 may cross the main flow direction of the cooling material passing through the second coupling part 422. In an example embodiment, the main flow direction of the cooling material passing through the first coupling part 412 may be substantially perpendicular to the main flow direction of the cooling material passing through the second coupling part 422.

In an example embodiment, a main flow direction of the cooling material passing through some areas of the first connection part 410, which overlap the second connection part 420, during the relative movement may be parallel to the main flow direction of the cooling material passing through the first coupling part 412 (see FIGS. 4 through 6).

In an example embodiment, the main flow direction of the cooling material passing through some areas of the first connection part 410, which overlap the second connection part 420, during the relative movement may be parallel to the main flow direction of the cooling material passing through the first coupling part 412 and cross the main flow direction of the cooling material passing through the second coupling part 422. In an example embodiment, the main flow direction of the cooling material passing through some areas of the first connection part 410, which overlap the second connection part 420, during the relative movement may be substantially perpendicular to the main flow direction of the cooling material passing through the second coupling part 422 (see FIGS. 7 through 12).

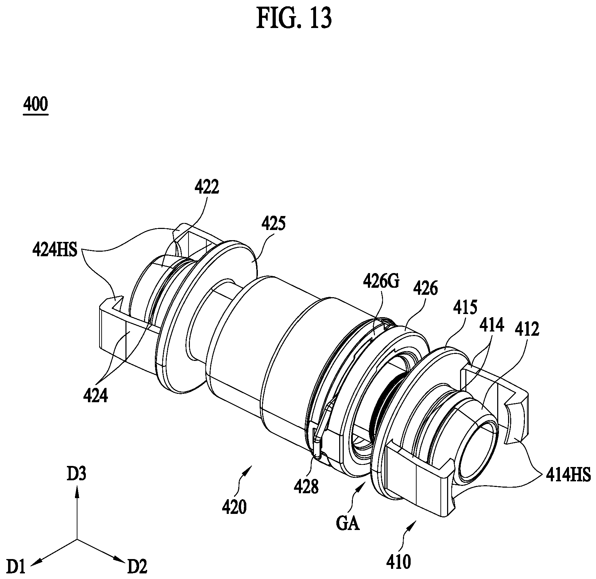

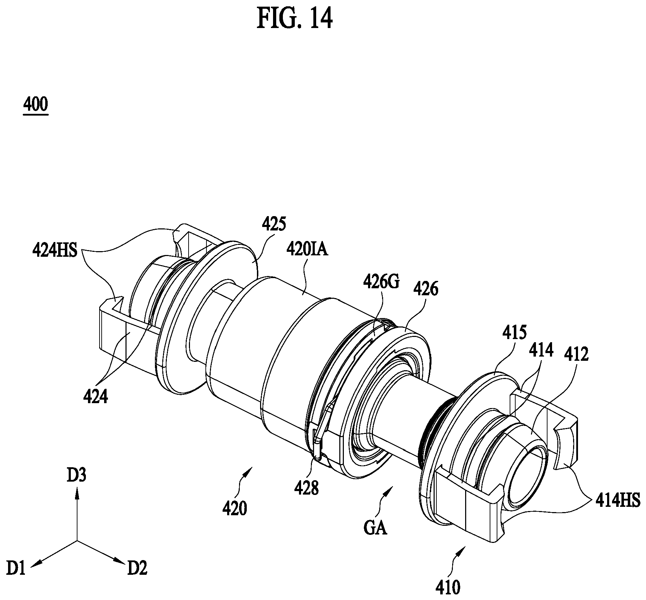

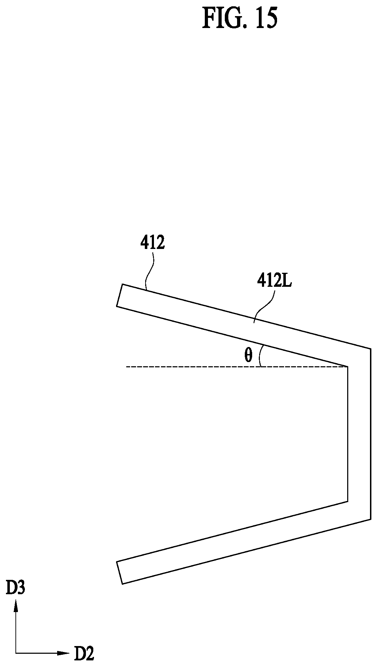

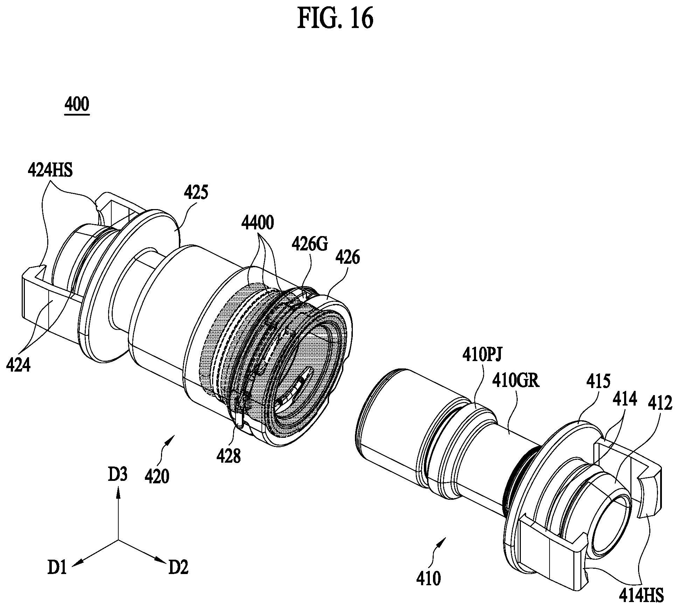

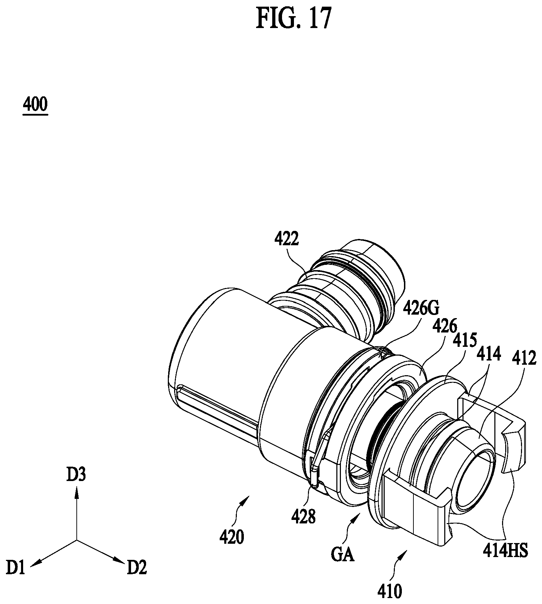

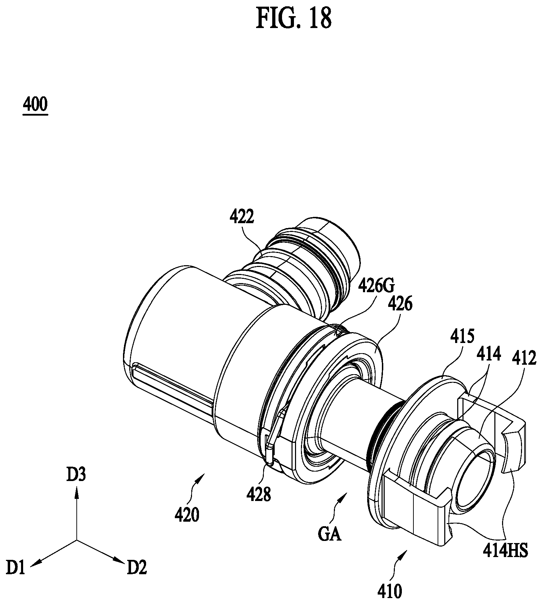

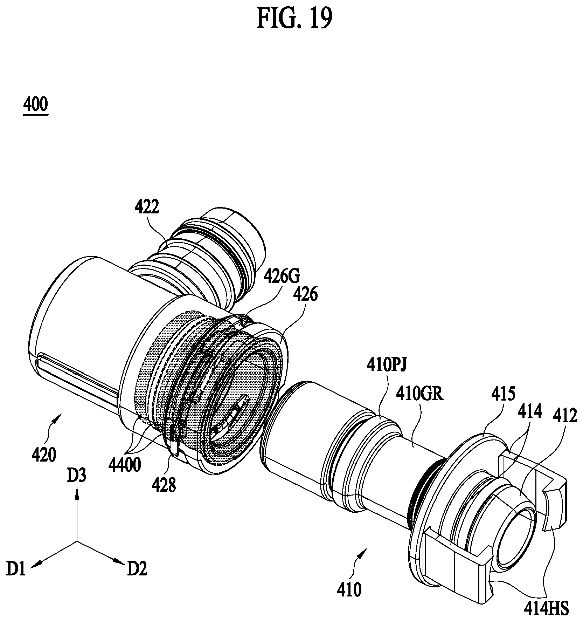

FIGS. 13 and 14 are perspective diagrams schematically illustrating the connection device 400 of the battery device 10 according to an example embodiment of the present disclosure. FIG. 15 is a cross-sectional diagram illustrating a cross section of a portion of the first coupling part 412 according to an example embodiment of the present disclosure. FIG. 16 is an exploded perspective diagram in which the connection device 400 of the battery device 10 according to an example embodiment of the present disclosure is disassembled. FIGS. 17 and 18 are perspective diagrams schematically illustrating the connection device 400 of the battery device 10 according to an example embodiment of the present disclosure. FIG. 19 is an exploded perspective diagram in which the connection device 400 of the battery device 10 according to an example embodiment of the present disclosure is disassembled.

Descriptions of FIGS. 1 through 12 may be referenced in descriptions of FIGS. 13 through 19 unless otherwise contradicted, and a difference will be mainly described below.

According to various example embodiments, the first coupling part 412 may include a first disk part 415 disposed between the insertion space 420IA and the first coupling part 412 during relative movement.

In an example embodiment, the first disk part 415 may have, for example, a shape of a circular plate.

In an example embodiment, the first disk part 415 may be disposed to at least partially overlap the insertion space 420IA when viewed in a direction of the relative movement (e.g., a D2 direction). In an example embodiment, the first disk part 415 may have a cross-sectional area larger than a cross-sectional area of an area overlapping the insertion space 420IA when viewed in the direction of the relative movement (e.g., the D2 direction). In other words, a portion of the first connection part 410 may be exclusively inserted into the insertion space 420IA by the first disk part 415.

Also, although the first connection part 410 partially rotates on the direction of the relative movement (e.g., the D2 direction) as a rotation axis while the first connection part 410 is inserted into the insertion space 420IA, in order that the first connection part 410 may be easily inserted into the insertion space 420IA regardless thereof, the first disk part 415 may have a non-directional flat disk shape on a rotation axis direction.

In an example embodiment, the first disk part 415 may be connected to the first hook part 414.

Meanwhile, in an example embodiment, the first coupling part 412 may have a shape of which an inner diameter is gradually decreased as becoming far from the second coupling part 422 (that is, in a +D2 direction) on the direction of the movement relative to the second coupling part 422 (e.g., the D2 direction) (see FIG. 15). For example, the first coupling part 412 may have an angled slope 412L. The slope 412L may refer to a surface having a predetermined angle Θ from the direction of the relative movement (e.g., the D2 direction). The predetermined angle Θ may exceed 0 degrees and may be less than 90 degrees. Through this, coupling performance of the first coupling part 412 may be improved.

In an example embodiment, the first connection part 410 may include a groove portion 410GR in at least a portion of an area overlapping the second connection part 420 during the relative movement. Also, the first connection part 410 may include the groove portion 410GR and a protrusion portion 410PJ in at least a portion of the area overlapping the second connection part 420 during the relative movement (see FIGS. 16 and 19). For example, the protrusion portion 410PJ may fix a position of the connection body 428 when the coupling body 428 passes through the through portion 426G, presses between the first connection part 410 and the second connection part 420, and is coupled in between. For example, the protrusion portion 410PJ may be formed by the groove portion 410GR, but is not limited thereto.

In an example embodiment, in some cases, the second connection part 420 may include a second disk part 425 disposed between the insertion space 420IA and the second coupling part 422 during the relative movement. The second disk part 425 may have, for example, a shape of a circular plate. The first disk part 415 and the second disk part 425 may face each other.

In an example embodiment, the second disk part 425 may be disposed to overlap the insertion space 420IA when viewed in the direction of the relative movement (e.g., the D2 direction). The second disk part 425 may have a cross-sectional area larger than a cross-sectional area of an area overlapping the insertion space 420IA when viewed in the direction of the relative movement (e.g., the D2 direction). Although the second connection part 420 partially rotates on the direction of the relative movement (e.g., the D2 direction) as a rotation axis while the first connection part 410 is inserted into the insertion space 420IA, the first disk part 415 may allow the first connection part 410 to be easily inserted into the insertion space 420IA to a determined extent. In an example embodiment, the second disk part 425 may be connected to the second hook part 424.

In an example embodiment, a sealing part (e.g., the O-ring 440O) may be coupled to at least a portion of an area, of the second connection part 420, overlapping the first connection part 410 during relative movement. However. it is not limited thereto. Through this, a sealing property of the first connection part 410 and the second connection part 420 may be improved when the first connection part 410 moves relative to the second connection part 420.

In an example embodiment, all of the first connection part 410 may not be inserted into the insertion space 420IA, and due to this, the connection device 400 may have a gap GA between the first connection part 410 and the second connection part 420. In addition, when the first connection part 410 includes the first disk part 415, it may be desired that the connection device 400 includes the gap GA between the first connection part 410 and the second connection part 420. Through this, damage to the first connection part 410 and the second connection part 420 is minimized, and the first connection part 410 may be allowed to easily inserted to the insertion space 420IA to the determined extent.

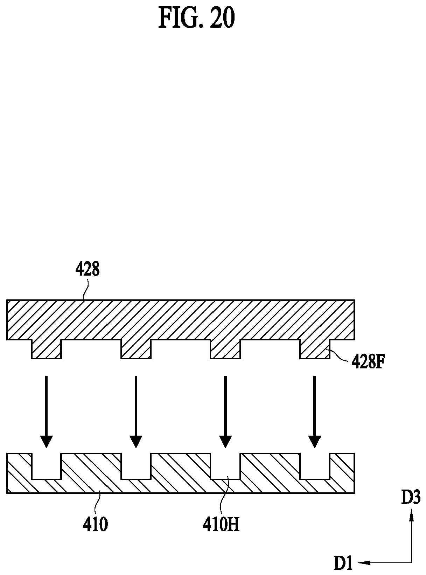

FIG. 20 is a cross-sectional diagram simply illustrating at least a portion of an area in which the coupling body 428 according to an example embodiment of the present disclosure is in contact with the first connection part 410. Referring to FIG. 20, in an example embodiment, the coupling body 428 may include a fin 428F protruding from a surface. The fin 428F may protrude toward the first connection part 410 when the coupling body 428 passes through the through portion 426G and presses a portion of the first connection part 410.

In an example embodiment, the first connection part 410 may include a groove 410H in at least some areas of a contact surface in contact with the coupling body 428. The groove 410H may be provided at a position corresponding to the fin 428F of the coupling body 428.

In an example embodiment, the fin 428F of the coupling body 428 and the groove 410H of the first connection part 410 may form fin-groove coupling by engaging each other when the coupling body 428 is in contact with the first connection part 410. Through this, in spite of a shock applied from an outside, such as vibration, the coupling body 428 may stably stop relative movement of the first connection part 410 and the second connection part 420. The respective numbers of fins 428F and grooves 410H are not particularly limited and may be one or more.

Meanwhile, the coupling body 428 may include a groove formed from a surface, and the first connection part 410 may include a fin protruding at a position corresponding to the groove formed to the coupling body 428 toward the coupling body 428. Through this, the coupling body 428 and the first connection part 410 may engage each other when connected, so that the fin-groove coupling may be formed.

In an example embodiment, the coupling body 428 may include a corrugated structure in at least some areas of a contact surface in contact with the first connection part 410. In addition, the first connection part 410 may include a corrugated structure in at least some areas of the contact surface in contact with the coupling body 428. Through this, in spite of a shock applied from an outside, such as vibration, the coupling body 428 may stably stop the relative movement of the first connection part 410 and the second connection part 420.

The battery device 10 according to an example embodiment of the present disclosure may be widely applied to an electric vehicle, a battery charging station, and another field of green technology using a battery such as solar power generation and wind power generation. Also, the battery device 10 according to an example embodiment of the present disclosure may be applied to an eco-friendly electric vehicle, hybrid vehicle, or the like that suppresses air pollution and greenhouse gas emission to prevent climate change.

The various example embodiments of the present disclosure have been described above in detail, but the scope of the present disclosure is not limited thereto. It will be apparent to those skilled in the art that various changes and modifications may be allowed within the range of the technical spirit of the present disclosure. In addition, the above-described example embodiments may be implemented without a portion of elements thereof, and each of the example embodiments may be implemented in combination with another.

### Description of Reference Numerals

- 10: Battery device
- 100: Battery assembly
- 200: Housing
- 300: Flow path
- 400: Connection device
- 410: First connection part
- 420: Second connection part
- 500: Integrated connector

### [Representative Drawing]

FIG. 3

## Claims

1. A battery device comprising:
a battery assembly;
a housing configured to accommodate the battery assembly;
a plurality of flow paths that is disposed between the battery assembly and an inner wall of the housing in the housing and in which a cooling material that cools heat generated in the battery assembly flows; and
a connection device configured to fluidly connect at least a portion of the plurality of flow paths,
wherein the connection device comprises:
a first connection part; and
a second connection part connected to the first connection part and coupled so that movement relative to the first connection part is allowed in the housing.

2. The battery device of claim 1, wherein the second connection part comprises an insertion space into which the first connection part is at least partially insertable.

3. The battery device of claim 2, wherein the first connection part at least partially comprises an area overlapping the second connection part during the relative movement.

4. The battery device of claim 3, wherein the first connection part further comprises:
a first coupling part not overlapping the second connection part during the relative movement; and
a first hook part mounted on an outer circumferential surface of the first coupling part and having a first protrusion catch part protruding inward toward the first coupling part.

5. The battery device of claim 4, wherein the first hook part further comprises a handling part formed to protrude in an outside direction opposite to a protrusion direction of the first protrusion catch part, and the handling part is formed to protrude not to overlap the insertion space when viewed in a direction of the relative movement.

6. The battery device of claim 5, wherein the second connection part further comprises a fixation coupling part to which a through portion is formed so that a portion of the first connection part which is inserted into the insertion space is exposed.

7. The battery device of claim 6, wherein the connection device further comprises a coupling body of which at least a portion is coupled between the first connection part and the second connection part to stop the relative movement of the first connection part and the second connection part by passing through the through portion.

8. The battery device of claim 6, wherein the fixation coupling part further comprises a catch part disposed to be in contact with the handling part by protruding from a surface facing the first connection part when the first connection part relatively moves.

9. The battery device of claim 6, wherein the fixation coupling part further comprises a seating part disposed to be in contact with the first hook part by indenting from a surface facing the first connection part when the first connection part relatively moves.

10. The battery device of claim 4, wherein the first connection part further comprises a first disk part disposed between the insertion space and the first coupling part during the relative movement and connected to the first hook part.

11. The battery device of claim 10, wherein the first disk part is disposed to at least partially overlap the insertion space when viewed in a direction of the relative movement.

12. The battery device of claim 11, wherein the first disk part has a cross-sectional area larger than a cross-sectional area of an area overlapping the insertion space when viewed in the direction of the relative movement.

13. The battery device of claim 4, wherein the first coupling part has a slope angled from a direction of the relative movement.

14. The battery device of claim 4, wherein the first connection part further comprises a groove portion in at least a portion of the area overlapping the second connection part during the relative movement.

15. The battery device of claim 4,
wherein the second connection part comprises
a second coupling part not overlapping the first connection part during the relative movement, and
a main flow direction of the cooling material passing through the first coupling part is parallel to a main flow direction of the cooling material passing through the second coupling part.

16. The battery device of claim 15, wherein the second connection part further comprises a second hook part mounted on an outer circumferential surface of the second coupling part and having a first protrusion catch part protruding inward toward the second coupling part.

17. The battery device of claim 16, wherein a main flow direction of the cooling material passing through a portion of areas of the first connection part, which overlaps the second connection part during the relative movement is parallel to the main flow direction of the cooling material passing through the first coupling part.

18. The battery device of claim 16, wherein the second connection part further comprises a second disk part disposed between the insertion space and the second coupling part during the relative movement and connected to the second hook part.

19. The battery device of claim 4, wherein the second connection part comprises a second coupling part not overlapping the first connection part during the relative movement, and
a main flow direction of the cooling material passing through the first coupling part is substantially perpendicular to a main flow direction of the cooling material passing through the second coupling part.

20. The battery device of claim 19, wherein a main flow direction of the cooling material passing through at least a portion of areas of the first connection part, which overlaps the second connection part during the relative movement is substantially parallel to the main flow direction of the cooling material passing through the first coupling part and substantially perpendicular to the main flow direction of the cooling material passing through the second connection part.
